# EUROPEAN PATENT APPLICATION

(11) **EP 4 621 144 A1**
(43) Date of publication of application: **24.09.2025**
(21) Application number: 22965884.4
(22) Date of filing: 16.11.2022
(51) Int. Cl.: E02F 9/26, G08B 3/10, G06T 11/60

(54) **CONSTRUCTION EQUIPMENT DISPLAY SYSTEM**

(71) Applicant: Volvo Construction Equipment AB, 63185 Eskilstuna (SE)
(72) Inventor: KIM, Taeyoun, Changwon-si, Gyeongsangnam-do 51426 (KR)
(74) Representative: Kransell & Wennborg KB
(86) International application number: PCT/KR2022/018133
(87) International publication number: WO 2024/106563

(57) **Abstract**

An aspect of contents of the present disclosure provides a construction equipment display system that is mounted on construction equipment including a work device and a cabin and configured to visually display at least one piece of work information of the construction equipment, the display system comprising a plurality of light-emitting units on which a plurality of stages of the work information may be displayed, wherein the plurality of light-emitting units comprise at least one indicator arranged in the vertical direction, and an indicator controller which receives the work information from at least one controller or at least one sensor of the construction equipment and operates the light-emitting units according to the work information to visually provide the work information to an operator, and the plurality of light-emitting units are controlled to emit light of different colors or for each position, depending on a degree to which the work information deviates from a preset criterion.

## Description

### TECHNICAL FIELD

The present disclosure relates generally to a display system for construction equipment, and in certain aspects to a display system for construction equipment including an indicator. The present disclosure relates more specifically to a display system for construction equipment including an indicator installed separately within an operator's field of view to intuitively guide the operator to recognize and correct work errors or risk signals.

### BACKGROUND

An excavator is construction equipment that performs a variety of works, such as digging the ground at construction sites, loading to transport soil, excavating to create foundations, crushing to dismantle buildings, grading to organize the ground, and leveling to level the ground. Such construction equipment is basically composed of a lower traveling body that acts as a moving part of the equipment, an upper swing body mounted on the lower traveling body and a work device.

Construction equipment such as an excavator is used in various construction sites, a very serious accident can occur if the operator is not paying the slightest attention.

Therefore, recently, equipment has been developed that recognizes workers or obstacles around construction equipment and sounds an alarm or notifies the operator through a display provided inside the cabin. In addition, equipment is being developed that informs the operator of work errors through a display when the work device goes beyond the work range set by the operator.

However, although the work range set by the operator is displayed on the display, the display is mainly located on the side of the cabin, and since the operator's view is focused on the front work device during operation, the operator may not easily recognize when the work device goes out of the work range. Furthermore, risk signals detected by construction equipment are displayed on the display, but if the operator focuses on the work field, he or she may recognize these risk signals late, which may lead to an accident.

### DETAILED DESCRIPTION

### TECHNICAL PROBLEMS

The present disclosure is intended to solve the problems of the prior art as described above, and the purpose of the present disclosure is to provide a display system for construction equipment that includes an indicator that displays an error range of a work device during operation so that an operator can immediately recognize and correct it, and allows an operator to immediately recognize a risk signal detected during operation.

### MEANS TO SOLVE PROBLEMS

The first aspect of the present disclosure provides construction equipment display system that is mounted on construction equipment including a work device and a cabin and configured to visually display at least one piece of work information of the construction equipment, the display system comprising a plurality of light-emitting units on which a plurality of stages of the work information may be displayed, wherein the plurality of light-emitting units comprise at least one indicator arranged in the vertical direction, and an indicator controller which receives the work information from at least one controller or at least one sensor of the construction equipment and operates the light-emitting units according to the work information to visually provide the work information to an operator, and the plurality of light-emitting units are controlled to emit light of different colors or for each position, depending on a degree to which the work information deviates from a preset criterion.

In one example, the indicator may be a display system for construction equipment, characterized in that it is installed on the front left and front right sides inside the cabin, respectively, to facilitate visual recognition by the operator.

In one example, the work information may be a display system for construction equipment, characterized in that it includes at least one of work depth information of a work device, maximum height information of a work device, POD (People & Obstacle Detection) information, lifting weight information of a work device, and battery charging information.

In one example, the display system of construction equipment may further include a display that provides an indicator setting screen so that one or more of a plurality of work information displayed on the indicator can be selected, and the indicator may be a display system for construction equipment, characterized in that it is controlled to display one or more work information selected on the setting screen.

In one example, the display system of construction equipment may be characterized in that when two pieces of work information are sequentially selected on the indicator setting screen of the display, one indicator is controlled to display the work information selected first, and the other indicator is controlled to display the work information selected later.

In one example, the display system of the construction equipment may be characterized in that when POD information is selected on the indicator setting screen of the display, both indicators are controlled to display POD information.

In one example, the display system of the construction equipment may be characterized in that when the work information is work depth information of a work device, the indicator displays the degree to which the work device deviates from a preset work depth in step-wise colors.

In one example, the display system of the construction equipment may be characterized in that when the work information is the maximum height information of a work device, the indicator displays the degree to which the work device approaches close to a preset height limit in step-wise colors.

In one example, the display system of the construction equipment may be characterized in that when the work information is POD information, the indicator displays the degree to which an obstacle or a worker approaches a preset surrounding area of the construction equipment in step-wise colors.

In one example, the display system of the construction equipment may be characterized in that when the work information is lifting weight information of the work device, the indicator displays the degree to which the load is reached based on the preset load in step-wise colors.

In one example, the display system of the construction equipment may be characterized in that when the work information is battery charging information of the work device, the indicator displays the charging level of the battery in step-wise colors.

In one example, the display system of the construction equipment may be characterized in that when POD information is selected on the indicator setting screen of the display, one indicator is divided into four and controlled to display POD information for the surrounding area.

In one example, the indicator controller may be a display system for construction equipment, characterized in that, when a control signal for POD information is received while the indicator is displaying information other than the POD information, the indicator is controlled to display the POD information first.

The above aspects, the claimed claims, and/or the examples disclosed above and hereafter in this specification may be suitably combined with one another as would be apparent to those skilled in the art.

Additional features and advantages are set forth in the description, claims and drawings which follow, and in part will be readily apparent to those skilled in the art from the foregoing, or may be recognized by practicing the disclosure as disclosed in this specification.

### EFFECTS OF THE INVENTION

A display system for construction equipment according to aspects of the present disclosure includes an indicator that indicates an error range or a risk signal of a work device during operation, so that an operator can intuitively recognize the error range or the risk signal without checking the display.

An indicator according to aspects of the present disclosure is, when one or more pieces of various work information is selected, controlled to display the corresponding work information, thus various work information can be provided through the indicator according to the needs of the operator.

It should be understood that the effects of the present disclosure are not limited to the effects described above, but include all effects that can be inferred from the detailed description of the present disclosure or the configuration of the present disclosure described in the claims.

### BRIEF DESCRIPTION OF THE DRAWINGS

A more detailed description of aspects of the present disclosure, examples of which are cited below, is given with reference to the accompanying drawings.
FIG. 1 is a perspective view showing the basic configuration of construction equipment according to one aspect of the present disclosure.
FIG. 2 is a drawing showing the interior of a cabin of construction equipment including an indicator according to one aspect of the present disclosure.
FIG. 3 is a block diagram schematically showing a display system for construction equipment according to one aspect of the present disclosure.
FIG. 4 is a perspective view of an indicator according to one aspect of the present disclosure.
FIG. 5 is an exploded view of an indicator according to one aspect of the present disclosure.
FIG. 6 shows an indicator setting screen displayed on a display according to one aspect of the present disclosure.
FIG. 7 shows work depth information displayed on an indicator according to one aspect of the present disclosure.
FIG. 8 shows the maximum height information displayed on an indicator according to one aspect of the present disclosure.
FIGs. 9 and 10 shows POD information displayed on an indicator according to one aspect of the present disclosure.
FIGs. 11 and 12 shows POD information displayed on an indicator according to another aspect of the present disclosure.
FIG. 13 shows the lifting weight information displayed on the indicator according to one aspect of the present disclosure.
FIG. 14 shows battery charging information displayed on an indicator according to one aspect of the present disclosure.

### DETAILED DESCRIPTION

Hereinafter, the contents of the present disclosure will be described with reference to the accompanying drawings. However, the present disclosure may be implemented in many different forms and is therefore not limited to the aspects described herein. Further, in order to clearly explain the disclosure in the drawings, parts that are not related to the explanation are omitted, and similar parts are given similar drawing reference numerals throughout the specification.

The terms used herein are for the purpose of describing particular embodiments only and are not intended to limit the present disclosure. As used in the present specification, the singular forms are intended to include the plural forms as well, unless the context clearly indicates otherwise. As used in the present specification, the term "and/or" includes one or more of all combinations of the associated listed items. The terms "comprises" and "comprising", when used in the present specification, specify the presence of stated features, integers, steps, operations, elements and/or components, but do not exclude the presence or addition of one or more other functions, integers, steps, works, elements, components and/or groups thereof.

Although the terms first, second, and the like may be used in the present specification to describe various elements, it will be understood that these elements should not be limited by these terms. These terms are used only to distinguish one element from another. For example, without departing from the scope of the present invention, the first component could be named the second component, and similarly, the second component could also be named the first component.

Relative terms such as "below" or "above" or "upper" or "lower" or "horizontal" or "vertical" may be used in the present specification to describe the relationship of one element to another, as illustrated in the drawings. It will be understood that these terms and those discussed above are intended to encompass different orientations of the device in addition to those depicted in the drawings. When a component is referred to as being "connected" or "coupled" to another component, it will be understood that it may be directly connected or coupled to the other component, or that intervening components may be present. In contrast, when an element is referred to be "directly connected" or "directly coupled" to another element, there are no intervening elements.

Unless otherwise defined, all terms (including technical and scientific terms) used in the present specification have the same meaning as commonly understood by those skilled in the art to which this invention belongs. It is to be further understood that terms used herein should have a meaning consistent with their meaning in the context of this specification and related art, and will not be construed in an idealized or overly formal sense unless expressly defined herein.

It should be understood that the present disclosure is not limited to the embodiments described above and illustrated in the drawings. Rather, those of ordinary skill in the art will recognize that many changes and modifications can be made within the scope of the present disclosure and the appended claims. In the drawings and specification, embodiments are disclosed for the purpose of illustration only and not limitation, and the scope of the present invention is set forth in the claims that follow.

Hereinafter, an aspect of the present disclosure will be described in detail with reference to the accompanying drawings.

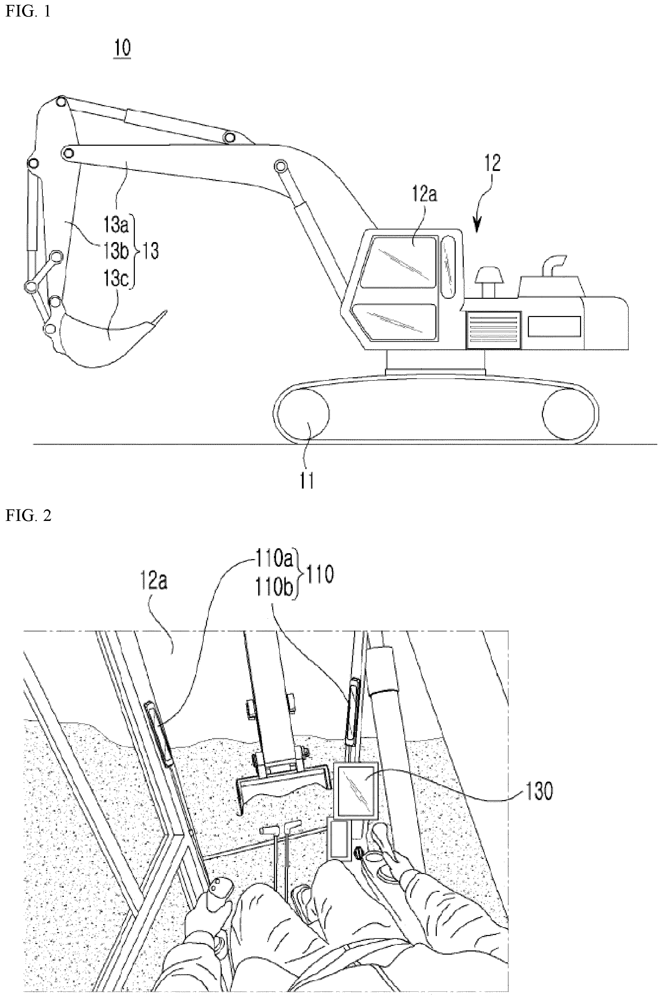

FIG. 1 is a perspective view showing the basic configuration of construction equipment according to one aspect of the present disclosure, and FIG. 2 is a drawing showing the interior of a cabin of construction equipment including an indicator according to one aspect of the present disclosure.

As referred to in FIGs. 1 and 2, construction equipment 10 according to an aspect of the present disclosure is configured to comprise a lower traveling body 11, an upper swing body 12 rotatably supported on the lower traveling body 11, and a boom 13a, an arm 13b, and an attachment 13c operated by respective cylinders, and a work device 13 supported on the upper swing body 12.

The lower traveling body 11 supports the load of the upper swing body 12 and the work device 13 and is configured to move the construction equipment forward and backward for the purpose of work.

The upper swing body 12 is configured to be supported on the lower traveling body 11 and is designed to rotate on the lower traveling body 11 by a swing device including a swing motor, a swing reduction gear, or the like.

A cabin 12a of construction equipment 10 can be installed on the upper swing body 12, and a driver's seat can be provided in the cabin 12a for an operator (construction equipment operator) to board and sit on. In front of the driver's seat, various handles and pedals for operating or driving the construction equipment 10 may be provided.

The work device 13 is installed to be supported on the upper swing body 12 and is configured to perform the work of the construction equipment 10. At this time, work can mean various tasks at civil engineering and construction sites. The work device 13 may be configured to include a boom 13a, an arm 13b, and an attachment 13c operated by cylinders respectively, and is installed while supported toward the front of the upper swing body 12. Therefore, when the upper swing body 12 rotates, the work device 13 rotates together with the upper swing body 12.

Meanwhile, the construction equipment 10 may include an automation system and a POD (People & Obstacle Detection) system to assist the operator's manual work.

The automation system assists the operator's work by allowing the operator to set the working area limits, such as the depth limit and height limit of the work device 13 through the display, and displays the set working area on the display, and controls the speed of the work device 13 as it gets closer to that range.

The POD system is a system to prevent accidents such as collisions with nearby obstacles or workers when the operator does not pay sufficient attention during the rotation process of the upper swing body 12 and work device 13, and assists the operator's work by displaying surroundings information of the construction equipment 10 on a display using radar and so on, or sounding an alarm.

However, although the work range set in the automation system is displayed on the display, the operator's view during operation is focused on the front work device 13, and if the work device 13 goes beyond the set work range, it is not easily recognized, which may lead to errors in work. In addition, risk signals detected by the POD system are displayed on the display, but if the operator's view is focused on the front work device 13, he or she may recognize them late, which may lead to an accident. Furthermore, since the display is placed on the side inside the cabin 12a, there is an inconvenience of the operator having to check the front work device 13 and the display in turn.

To improve this, construction equipment 10 according to an aspect of the present disclosure may include a display system 100 of the construction equipment that visually displays one or more pieces of work information of the construction equipment 10 so that an operator can intuitively recognize work errors or risk signals.

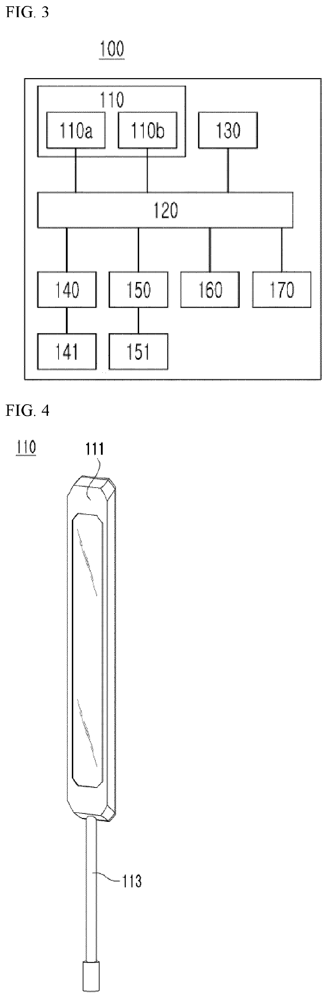

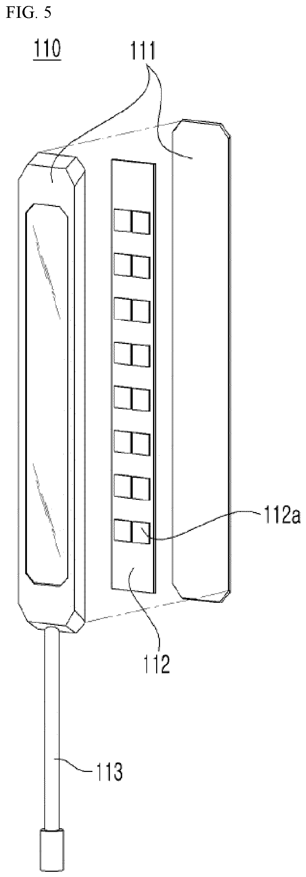

FIG. 3 is a block diagram schematically illustrating a display system of construction equipment according to one aspect of the present disclosure, FIG. 4 is a perspective view of an indicator according to one aspect of the present disclosure, and FIG. 5 is an exploded view of an indicator according to one aspect of the present disclosure.

As referenced in FIGs. 2 to 5, a display system 100 for construction equipment according to an aspect of the present disclosure is configured to include an indicator 110 and an indicator controller 120.

The indicator 110 includes a housing 111 in the shape of a bar that is formed vertically, a light-emitting board 112 placed inside the housing 111, and a connector 113 for connection to an indicator controller 120.

A plurality of light emitting units 112a capable of displaying various stages of work information can be arranged vertically on the light emitting board 112. The light emitting units 112a may preferably be an LED (light emitting diode) capable of emitting light of one or more colors. However, it is not limited to this, and other light source elements capable of emitting light may be applied to the light emitting units 112a.

As an example, indicators 110 may be installed on the front left and front right sides inside the cabin 12a, preferably on the front two pillars of the cabin 12a, to facilitate visual recognition by the operator. Structures capable of mounting an indicator 110 such as a magnet, screw, clip, or tape is formed in the housing 111, through which the indicator 110 can be easily mounted inside the cabin 12a.

Accordingly, the indicator 110 can be positioned within the operator's front view of working field, and the operator can intuitively determine work errors or risk signals by checking the color or position of light emitted from the light emitting units 112a of the indicator 110 without checking the display to determine how accurately the operator is excavating for a preset working range or whether there is a risk of collision with a nearby obstacle.

The indicator controller 120 receives work information from one or more controllers or one or more sensors of the construction equipment, and is configured to operate the light emitting units 112a according to the work information to visually provide the work information to the operator.

The indicator controller 120 controls multiple light emitting units 112a in order to emit light in different colors or at different locations depending on the degree to which the work information deviates from a preset criterion.

According to an example, the work information displayed by the indicator 110 may include one or more of the following: work depth information of the work device, the maximum height information of the work device, POD (People & Obstacle Detection) information, lifting weight information of the work device, and battery charging information.

The work depth information of the work device can be calculated using acceleration values measured by one or more inertial measurement units (IMUs) 141 mounted on the work device 13, and may be information on the degree to which the attachment 13a of the work device 13 deviates from the work depth preset in the automation system, i.e., errors. This work depth information can be transmitted from the controller 140 of the automation system to the indicator controller 120 in the form of a control signal. The indicator controller 120 can control the indicator 110 to display in step-wise colors the degree to which the work device 13 deviates from the preset work depth using the control signal.

The maximum height information of the work device can be calculated using an acceleration value measured by one or more inertial measurement units 141 mounted on the work device 13, and may be information on the distance at which the maximum height of the work device 13 approaches a preset height limit in the automation system. This maximum height information can be transmitted from the controller 140 of the automation system to the indicator controller 120 in the form of a control signal. The indicator controller 120 can control the indicator 110 to display in step-wise colors the degree to which the work device 13 approches the preset height limit using the control signal.

The POD information of the work device can be obtained using one or more radars 151 or the like, mounted on the construction equipment 10, and may be information on the degree to which an obstacle or worker approaches a preset surrounding area of the construction equipment 10 in the POD system. This POD information can be transmitted from the controller 150 of the POD system to the indicator controller 120 in the form of a control signal. The indicator controller 120 can control the indicator 110 to display in step-wise colors the degree to which an obstacle or worker approaches a preset surrounding area using the control signal.

The lifting weight information can be obtained using one or more pressure sensors 160 mounted on the work device 13, and may be information on the load applied to the work device 13 according to the lifting weight in order to prevent the risk of the work device 13 being overloaded during lifting work. This lifting weight information can be transmitted from the pressure sensor 160 to the indicator controller 120 in the form of a signal. The indicator controller 120 can control the indicator 110 to display in step-wise colors the degree to which the load is reached using the signal based on the preset load.

Battery charging information can be obtained from one or more batteries 170 mounted on the construction equipment 10, and may be information for indicating the charging status of the battery. This battery charging information can be transmitted from the battery 170 to the indicator controller 120. The indicator controller 120 can control the indicator 110 to display the level of charge of the battery 170 in step-wise colors.

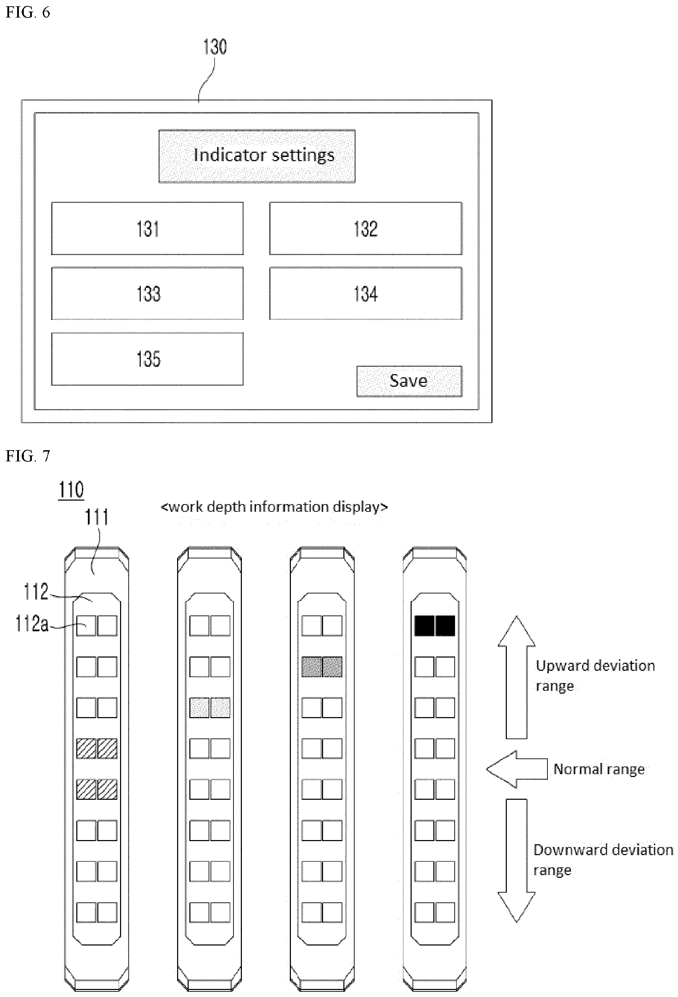

FIG. 6 shows an indicator setting screen displayed on a display according to one aspect of the present disclosure.

As referenced in FIGs. 2, 3 and 6, the display system 100 of construction equipment according to an aspect of the present disclosure may further include a display 130 that provides an indicator setting screen so that one or more of a plurality of work information displayed on an indicator 110 can be selected.

The indicator setting screen of the display 130 may display icons for each of the depth indicator 131, the maximum height indicator 132, the POD indicator 133, the lifting weight indicator 134, and the battery indicator 135, and the operator may select and save icons for one or more pieces of work information desired to be displayed on the indicator 110. Thereby, the indicator 110 is controlled to display one or more selected pieces of work information.

According to an example, when an operator selects one piece of work information on the indicator setting screen of the display 130, one or more of the two indicators 110a, 110b can be controlled to display the selected work information.

According to an example, when an operator sequentially selects two pieces of work information on the indicator setting screen of the display 130, one of the two indicators 110a, 110b can be controlled to display the work information selected first, and the other can be controlled to display the work information selected later.

According to an example, when an operator selects POD information on the indicator setting screen of the display 130, one indicator 110 can be divided into four and controlled to display POD information for the surrounding area. In other words, since the POD information is information on the degree to which an obstacle or a worker approaches a preset surrounding area of the construction equipment 10, one indicator 110 including a light-emitting unit 112a consisting of a plurality of even columns and a plurality of even rows can be divided into four and controlled to display POD information for the front left, front right, rear left, and rear right.

According to an example, when an operator selects POD information on the indicator setting screen of the display 130, both indicators 110a, 110b can be controlled to display POD information. In other words, since the POD information is information on the degree to which an obstacle or a worker approaches a preset surrounding area of the construction equipment 10, both indicators 110a, 100b arranged on both sides can be controlled to display the POD information so that the operator can easily recognize it. For example, the left indicator 110a can be divided into two to display POD information for the front left and rear left, and the right indicator 110b can be divided into two to display POD information for the front right and rear right.

According to an example, when a control signal for POD information is received from the controller 150 of the POD system while the indicator 110 is displaying information other than POD information, the indicator controller 120 can control the indicator 110 to display POD information first. In other words, when the POD system detects that an obstacle or a person has entered the surrounding area or the risk area while the indicator 110 is displaying information other than POD information, such as work depth information, maximum height information, lifting weight information, and battery information, the indicator 110 is controlled by the indicator controller 120 to display POD information, thereby alerting the operator that an obstacle or a person is approaching the construction equipment 10.

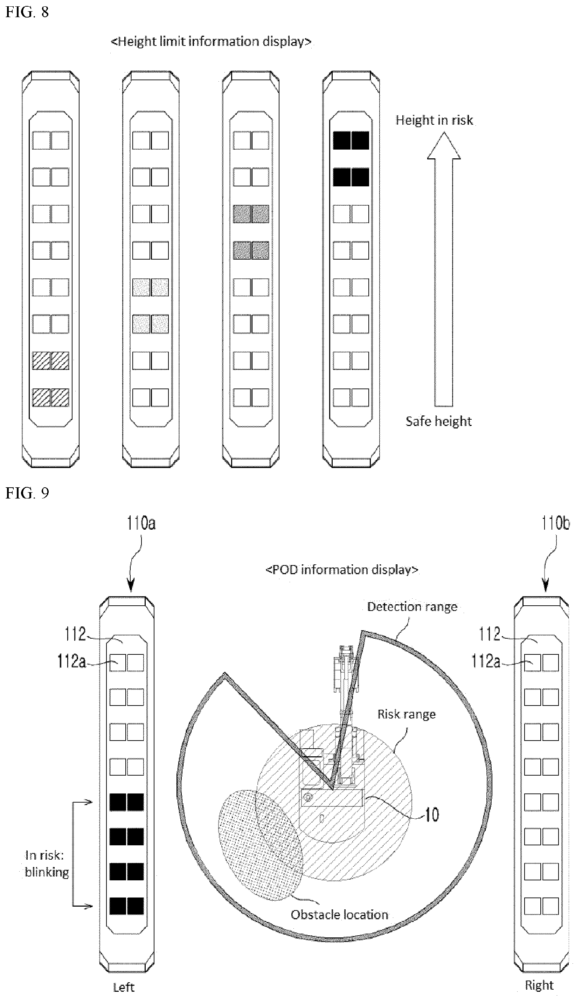

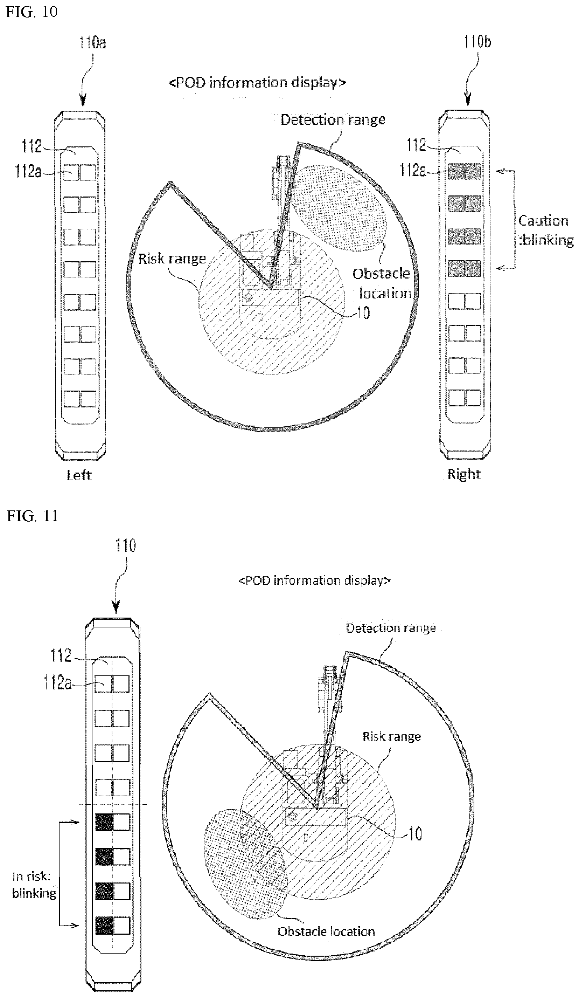

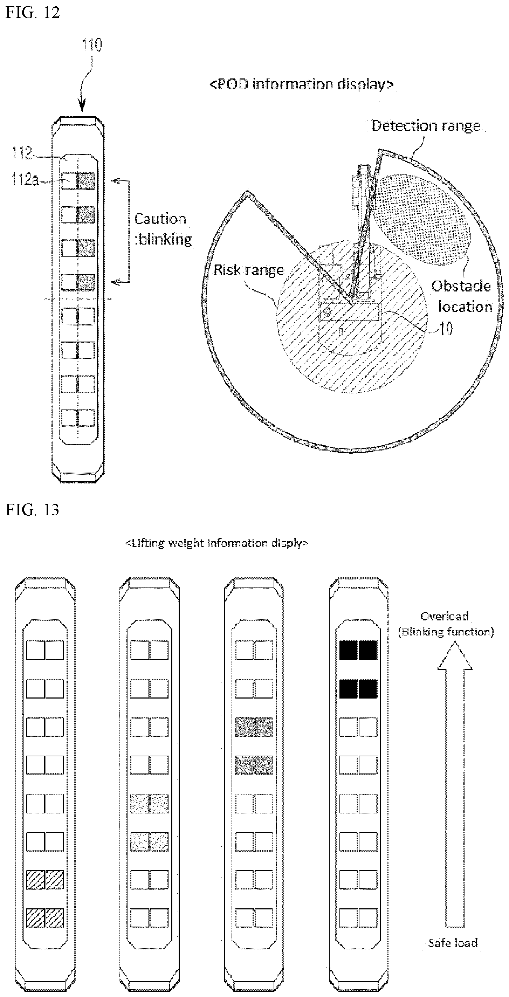

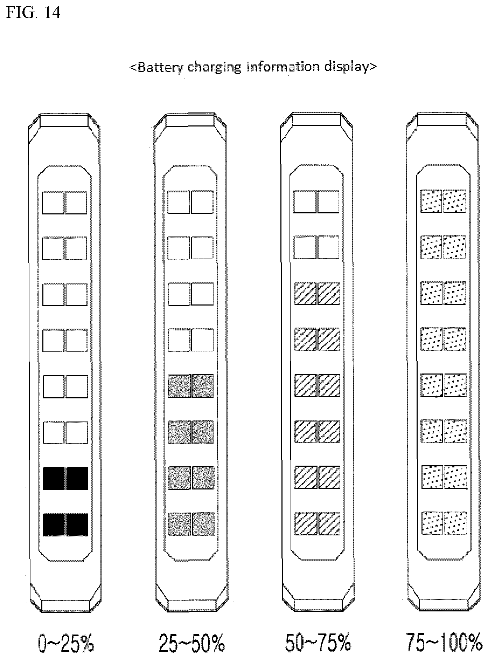

FIG. 7 shows work depth information displayed on an indicator according to one aspect of the present disclosure, FIG. 8 shows maximum height information displayed on an indicator according to one aspect of the present disclosure, FIGs. 9 and 10 show POD information displayed on an indicator according to one aspect of the present disclosure, FIGs. 11 and 12 show POD information displayed on an indicator according to another aspect of the present disclosure, FIG. 13 shows lifting weight information displayed on an indicator according to one aspect of the present disclosure, and FIG. 14 shows battery charging information displayed on an indicator according to one aspect of the present disclosure.

As an example of an indicator 110 displaying work depth information as referenced in FIG. 7, when the work device 13 is positioned within a normal range with respect to the preset work depth, the light emitting unit 12a located in the middle of the indicator 110 emits green light, and depending on the degree to which the work device 13 deviates upward or downward with respect to the preset work depth, the light emitting unit 112a located at each stage sequentially emits yellow, orange, and red light. In other words, the more the color changes from green to red, it means the greater the deviation of the work device 13 from the preset work depth, and as the work device 13 moves away from the preset work depth, the light emitting unit 112a located further away from the light emitting unit 112a located in the middle of the indicator 110 becomes to emit light, so that the operator can intuitively recognize the work error.

As an example of an indicator 110 displaying maximum height information as referenced in FIG. 8, when the maximum height of the work device 13 is located at a safe height with respect to a preset height limit, the light emitting unit 112a located at the lower side of the indicator 110 emits green light, and depending on the degree to which the maximum height of the work device 13 approaches the preset height limit, the light emitting unit 112a located at each stage sequentially emits yellow, orange, and red light. In other words, it means that it gets closer to the preset height limit as it changes from green to red, and as the work device 13 approaches the preset height limit, the light emitting unit 112a located further away from the light emitting unit 112a located at the bottom of the indicator 110 becomes to emit light, so that the operator can intuitively recognize the height information.

As an example of an indicator 110 displaying POD information as shown in FIGs. 9 and 10, when an obstacle or a worker is located at the rear left side with respect to a preset surrounding area, a light emitting unit 112a located at the lower half of the left indicator 110a emits light, and depending on the degree to which the obstacle or worker approaches the construction equipment 10, a light emitting unit 112a located at the lower half of the left indicator 110a sequentially emits green, yellow, orange, and red light. In other words, it means that it gets closer to the preset risk range as it changes from green to red. Similarly, when an obstacle or a worker is located to the front right side of the preset surrounding area, the light emitting unit 112a located on the upper half of the right indicator 110b sequentially emits green, yellow, orange, and red light depending on the degree to which the obstacle or worker approaches the construction equipment 10. According to an example, orange may mean that an obstacle or a worker is located near but not within the risk range of the construction equipment 10 and thus requires caution, and red may mean that an obstacle or a worker is located within the risk range of the construction equipment 10 and thus is dangerous.

As an example of one indicator 110 displaying POD information as shown in FIGs. 11 and 12, when an obstacle or a worker is located at the rear left side with respect to a preset surrounding area, a light emitting unit 112a located at the lower left side of one indicator 110 divided into four emits light, and depending on the degree to which the obstacle or worker approaches the construction equipment 10, the light emitting unit 112a located at the lower left side of the indicator 110 sequentially emits green, yellow, orange, and red light. In other words, it means that it gets closer to the preset risk range as it changes from green to red. Similarly, when an obstacle or a worker is located to the front right side of the preset surrounding area, the light emitting unit 112a located on the upper right side of the indicator 110 sequentially emits green, yellow, orange, and red light depending on the degree to which the obstacle or worker approaches the construction equipment 10. According to an example, orange may mean that an obstacle or a worker is located near but not within the risk range of the construction equipment 10 and thus requires caution, and red may mean that an obstacle or a worker is located within the risk range of the construction equipment 10 and thus is dangerous.

As an example of an indicator 110 displaying lifting weight information as referenced in FIG. 13, when the work device 13 is at a safe load for a preset load, the light emitting unit 112a located at the lower side of the indicator 110 emits green light, and depending on the degree to which the work device 13 reaches the preset load, the light emitting unit 112a located at each stage sequentially emits yellow, orange, and red light. In other words, it means that it gets closer to the preset load as it changes from green to red, since the light emitting unit 112a located further away from the light emitting unit 112a located at the bottom of the indicator 110 becomes to emit light when it gets closer to the preset load, so that the operator can intuitively recognize the load information.

As an example in which the indicator 110 displays battery charging information as shown in FIG. 14, the light emitting unit 112a located at each stage sequentially emits red, orange, green, and blue light depending on the charging level of the battery. In other words, it means a better battery charging status as the color changes from red to blue, and since the light emitting unit 112a located further away from the light emitting unit 112a located at the bottom of the indicator 110 becomes to emit light as the battery is fully charged, allowing the operator to intuitively recognize the battery charging information.

As such, a display system for construction equipment according to aspects of the present disclosure includes an indicator that indicates an error range or a risk signal of a work device during operation, so that an operator can intuitively recognize the error range or a risk signal without checking the display. Further, an indicator according to aspects of the present disclosure is, when one or more pieces of various work information is selected, controlled to display the corresponding work information, thus various work information can be provided through the indicator according to the needs of the operator.

The description of the present disclosure as described above is for illustrative purposes only, and a person having ordinary skill in the art to which the present disclosure pertains will understand that the present disclosure can be easily modified into other specific forms without changing the technical idea or essential characteristics of the present disclosure. Therefore, the aspects described above should be understood as exemplary in all respects and not restrictive. For example, each component described as a single entity may be implemented in a distributed manner, and likewise, components described as distributed may be implemented in a combined manner.

The scope of the present disclosure is represented by the claims set forth below, and all changes or modifications derived from the meaning and scope of the claims and their equivalent concepts should be interpreted as being included within the scope of the present disclosure.

### Description of the reference numerals

- 10: construction equipment
- 11: Lower traveling body
- 12: Upper swing body
- 12a: Cabin
- 13: Work device
- 13a: Boom
- 13b: Arm
- 13c: Attachment
- 100: Display system
- 110: Indicator
- 110a: Left indicator
- 110b: Right indicator
- 111: Housing
- 112: Light emitting board
- 112a: Light emitting unit
- 113: Connector
- 120: Indicator Controller
- 130: Display
- 140: Automatic Control Controller
- 141: Inertial Measurement Unit
- 150: POD Controller
- 151: Radar
- 160: Pressure sensor
- 170: Battery

## Claims

1. A display system of construction equipment, which is mounted on construction equipment equipped with a work device and a cabin and visually displays one or more work information of the construction equipment, comprising:
an indicator that has a plurality of light emitting units capable of displaying various stages of the work information, wherein the plurality of light emitting units are one or more indicators arranged in a vertical direction; and
an indicator controller that receives the work information from one or more controllers or one or more sensors of the construction equipment, and operates the light emitting units according to the work information in order to visually provide the work information to an operator,
wherein the plurality of light emitting units are controlled to emit light of different colors or for each position depending on a degree to which the work information deviates from a preset criterion.

2. The display system of construction equipment of claim 1,
**characterized in that** the indicator is installed on the front left and front right sides respectively inside the cabin to facilitate visual recognition by the operator.

3. The display system of construction equipment of claim 1,
**characterized in that** the work information includes one or more of work depth information of a work device, maximum height information of a work device, POD (People & Obstacle Detection) information, lifting weight information of a work device, and battery charging information.

4. The display system of construction equipment of claim 3,
further comprising a display providing an indicator setting screen so that one or more of the plurality of work information displayed by the indicator can be selected, and **characterized in that** the indicator is controlled to display one or more pieces of work information selected from the setting screen.

5. The display system of construction equipment of claim 4,
**characterized in that**, when two pieces of work information are sequentially selected on the indicator setting screen of the display, one indicator is controlled to display the work information selected first, and the other indicator is controlled to display the work information selected later.

6. The display system of construction equipment of claim 5,
**characterized in that**, when POD information is selected on the indicator setting screen of the display, both indicators are controlled to display POD information.

7. The display system of construction equipment of claim 3,
**characterized in that**, when the work information is work depth information of a work device, the indicator displays the degree to which the work device deviates from a preset work depth in step-wise colors.

8. The display system of construction equipment of claim 3,
**characterized in that**, when the work information is the maximum height information of a work device, the indicator displays the degree to which the work device approaches close to a preset height limit in step-wise colors.

9. The display system of construction equipment of claim 3,
**characterized in that**, when the work information is POD information, the indicator displays the degree to which an obstacle or a worker approaches a preset surrounding area of the construction equipment in step-wise colors.

10. The display system of construction equipment of claim 3,
**characterized in that**, when the work information is lifting weight information of a work device, the indicator displays the degree to which the load is reached based on the preset load in step-wise colors.

11. The display system of construction equipment of claim 3,
**characterized in that**, when the work information is battery charging information of a work device, the indicator displays the charging level of the battery in step-wise colors.

12. The display system of construction equipment of claim 4,
**characterized in that**, when POD information is selected on the indicator setting screen of the display, one indicator is divided into four and controlled to display POD information for the surrounding area.

13. The display system of construction equipment of claim 4,
wherein the indicator controller is **characterized in that**, when a control signal for POD information is received while the indicator is displaying information other than the POD information, the indicator is controlled to display the POD information first.
